(19)

Europäisches
Patentamt
European
Patent Office
Office européen
des brevets

(11) **EP 2 343 452 A2**

(12) **EUROPEAN PATENT APPLICATION**

(43) Date of publication:
**13.07.2011 Bulletin 2011/28**

(51) Int Cl.:
***F03D 5/00*** (2006.01)

(21) Application number: **10197156.2**

(22) Date of filing: **28.12.2010**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **06.01.2010 SE 1050002**

(71) Applicant: **Winfoor Ab
244 60 Furulund (SE)**

(72) Inventor: **Berthilsson, Rikard
244 60 Furulund (SE)**

(74) Representative: **Mannerlöf Tenning, Eva Marie
Brann AB
P.O. Box 12246
102 26 Stockholm (SE)**

(54) **Wind energy converter**

(57)      An energy converter for converting wind energy
into movement, comprising a first support (11); a second
support (12); and a wind element (10) connected be-
tween the supports (11, 12) such that it is capable of
moving the first support (11) between a first location (L1)
and a second location (L2) by oscillating around a geometrical axis (A) extending between the supports (11,
12), when the wind element (10) is subjected to a wind
(W). The wind element (10) is configured to repeatedly
oscillate between two positions, such that the first support
(11) is periodically moved: from a first location (L1) to a
second location (L2) and back to the first location (L1),
when the wind element (10) oscillates from a first position
to a second position; from the first location (L1) to the
second location (L2) and back to the first location (L1),
when the wind element (10) oscillates from the second
position to the first position.

Fig. 1

## Description

Technical Field

The invention relates to a device for converting wind energy into movement.

Background Art

Wind energy is a plentiful, renewable and clean energy form and has therefore great advantages in comparison with non-renewable energy sources, such as oil, coal and nuclear energy. Unfortunately, wind energy is not as cost effective as the mentioned, non-renewable energy sources. However, if the cost of producing wind energy could be reduced, a shift towards a more long-term, durable and cleaner energy production can be more easily facilitated.

In the literature apparatuses for producing wind energy have been proposed. In principle, the apparatuses are typically based on capturing and converting wind energy into a useful movement, which in turn can be used for e.g. driving a generator or pumping a fluid.

One apparatus for producing wind energy is disclosed in US4915584, which document describes a wind turbine that is based on a horizontal oscillation of a blade or wing. The wing is stiff and can rotate around an axis a fraction of a full circle before rotating back again. The wind turbine requires an oscillating movement to be converted into a circular movement. Similar devices are described in FR510435 and US3995972.

Another apparatus for converting wind energy is described in US2009/0121489A1, which document shows an energy converter that comprises a flexible plane unit placed in a position to be exposed to the wind. At least a part of a peripheral edge of the flexible plane unit is capable of fluttering freely with the wind, and an energy conversion unit convert vibration energy induced by the flexible plane into electric energy. A transmission unit is connected to the flexible plane unit for transmitting the vibration (that is caused by the wind) to the energy conversion unit. The flexible plane is a flag-like cloth that randomly flutters in the wind. The random, i.e. non-periodic movement of the flexible plane, is then converted into useful energy.

Further background art is reflected by US4486145, GB2027494A and WO2006/043600A1.

The above mentioned devices are generally capable of converting wind energy into movement that can be used for energy production. However, they suffer form being relatively costly in relation to the obtained energy-output.

Summary

It is an object of the invention to at least partly overcome one or more of the above-identified limitations of the prior art. In particular, it is an object to provide an alternative energy converter that provides a relatively high energy output in relation to its cost.

Hence an energy converter is provided for converting wind energy into movement, said energy converter comprising: a first support; a second support arranged at a distance from the first support; and a wind element connected to the first support and connected to the second support, such that the wind element is capable of moving the first support between a first location and a second location by oscillating around a geometrical axis extending between the supports, when the wind element is subjected to a wind. The wind element is configured to repeatedly oscillate between a first position and a second position, such that i) a first side of the wind element faces a direction of the wind when the wind element is in the first position, and a second side of the wind element opposite the first side faces the direction of the wind when the wind element is in the second position, ii) the first support is moved from the first location to the second location and back to the first location, when the wind element oscillates from the first position to the second position, and iii) the first support is moved from the first location to the second location and back to the first location, when the wind element oscillates from the second position to the first position.

The wind element may be configured to oscillate between the first position and the second position by repeatedly rotating about the geometrical axis.

The wind element may be configured to oscillate between the first position and the second position by repeatedly rotating at least 45° about the geometrical axis.

The wind element may be configured to oscillate from the first position to the second position by a first rotational movement and oscillate from the second position to the first position by a second rotational movement, wherein the second rational movement may be opposite the first rotational movement.

The wind element may be configured to move the first support such that the distance between the supports repeatedly increase and decrease, when the wind element oscillates between the first and second positions.

The wind element may be configured to move the first support such that the repeated increase and decrease of the distance between the supports may be periodic.

The wind element may be configured to move the first support from the second location to the first location in a direction along the direction of the wind.

The first support may be configured to move from the first location to the second location and back to the first location along a same path of movement. More particularly, the path of movement may be linear.

The first support may be configured to move from the first location to the second location in a first direction, and move from the second location to the first location in a second direction that may be opposite the first direction.

The energy converter may comprise a guide element configured to control the movement of the first support between the first and second locations.

The guide element may extend in a longitudinal direction and in a transverse direction.

The wind element may comprise a weight section arranged at a distance from the geometrical axis.

The wind element may comprise a longitudinal stiffener element extending in a longitudinal direction of the wind element.

The wind element may comprise a transverse stiffener element extending in a transverse direction of the wind element.

The energy converter may comprise a spinning wheel connected to the first support, for transferring the movement of the first support into a rotational movement of the spinning wheel.

The energy converter may comprise a retraction element configured to apply a force on the first support, such that the first support may be moved from the first location to the second location.

The energy converter may comprise a resilient member connected to the first support, for storing energy induced by the movement of the first support.

The resilient member may be configured to transfer the stored energy to a generator.

The second support may comprise a damper configured to damp vibrations in the wind element.

The wind element may be configured to have the form of a first arc, when the first side of the wind element faces the wind, and have the form of a second arc with a shape opposite the first arc, when the second side of the wind element faces the wind.

The wind element may be configured to rotate around the geometrical axis such that the oscillation of the wind element between the first position and the second position may be periodic.

The wind element may be configured to rotate around the geometrical axis such that i) the oscillation of the wind element from the first position to the second position may be followed by oscillation of the wind element from the second position to the first position, and ii) the oscillation of the wind element from the second position to the first position may be followed by oscillation of the wind element from the first position to the second position.

The wind element may be a sail, for example made of a synthetic cloth or another fiber based structure.

Still other objectives, features, aspects and advantages of the invention will appear from the following detailed description, from the attached claims as well as from the drawings.

Brief Description of the Drawings

Embodiments of the invention will now be described, by way of example, with reference to the accompanying schematic drawings, in which

    Fig. 1 is a side view of an embodiment of an energy converter for converting wind energy into movement,

    Fig. 2 is a detailed view with exemplifying measurements of a wind element used for the energy converter of Fig. 1,

    Fig. 3a is a side view of the energy converter of Fig. 1, as seen in a direction transverse the wind,

    Fig. 3b is a view of the energy converter of Fig. 3a, as seen along a direction of the wind,

    Fig. 4a is a side view of the energy converter of Fig. 1, as seen in a direction transverse the wind when the wind element is in a second position,

    Fig. 4b is a view of the energy converter of Fig. 4a, as seen along a direction of the wind,

    Figs 5a-5f illustrate an oscillation pattern of a wind element used for the energy converter of Fig. 1, as seen in a direction along the wind when the wind element is subject to a wind,

    Figs 6a-6f illustrate the oscillation pattern of Figs 5a-5f, as seen in a direction transverse the wind,

    Fig. 7a is a side view of a spinning wheel used for the energy converter of Fig. 1,

    Fig. 7b is a cross-sectional view of the spinning wheel of Fig 7a, as seen along section A-A in Fig. 7a,

    Fig. 7c is en enlarged view of section B in Fig 7b,

    Fig. 8a shows a fundamental mode and the two overtones for the wind element of Fig. 2, and

    Fig. 8b illustrates a periodic oscillation of the wind element of Fig. 2.

    Fig. 9 illustrates a damping mechanism according to the invention,

    Fig. 10 is a side view of a sway setup of the energy converter according to one embodiment of the invention,

    Fig. 11 is a front view of the sway setup in Fig. 10.

    Fig. 12 illustrates a support system for a plurality of energy converters.

    Fig. 13 illustrates an oscillation pattern of a wind element used for the energy converter of Fig. 1, as seen from above when the wind element is subject to a wind.

Detailed description

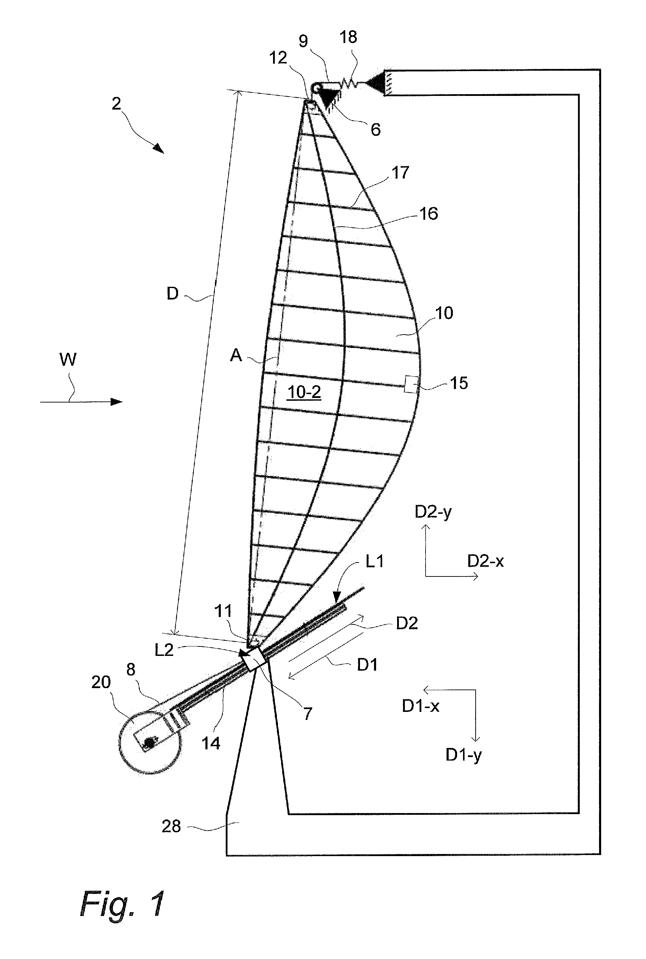

With reference to Fig. 1 an energy converter 2 comprises a wind element 10 in the form of a sail. The wind element 10 can be made of conventional sail cloth used for e.g. spinnakers and has a number of stiffener elements, such as the longitudinal stiffener 16 and the transverse stiffener 17. At a lower part of the wind element 10 a first support 11 is arranged and at a top of the wind element 10 a second support 12 is arranged. The supports 11, 12 are typically integrated in the wind element 10, for example as connection elements to which a respective fixing structure can be connected, such as a sleigh (wagon) 7 connected to the first support 11 and a first cable 9 connected to the second support 12.

The wind element 10 has according to one embodiment a planar shape with a first side (referred to as first side 10-1 in subsequent Figs) and a second side 10-2 opposite the first side, and the first support 11 and the second support 12 are arranged at a distance D from each other. According to another embodiment, the wind element 10 has a bellied shape. The sleigh 7 is movably arranged on a guide element 14 comprising a guide rail 14 that allows the sleigh 7 to move between a first location and a second location along the guide rail 14. Since the first support 11 is connected to the sleigh 7, the first support 11 is accordingly also allowed to move between a first location L1 and a second location L2. When the first support 11 moved from the first location L1 to the second location L2, the first support 11 moved in a first direction D1, and when the first support 11 moves form the second location L2, to the first location L1, the first support 11 moves in a second direction D2 that is opposite the first direction D1. The first direction has both a horizontal component D1-x and a vertical component D1-y, that, accordingly, are opposite a horizontal component D2-x of the second direction D2 and a vertical component D2-y of the of the second direction D2.

A geometrical axis A extends between the supports 11, 12, and when the first support 11 moves between the first location L1 and the second location L2 the distance D between the supports 11, 12 varies, since the guide rail 14 is oriented such that the distance D decreases when the first support 11 moves in a direction towards the first location L1. This variation in distance allows the wind element 10 to bulge more or less, i.e. form an arc with a smaller or relative larger curvature, when the first support 11 moves.

The wind element 10 includes a weight section 15 at an end of the wind element 10 opposite (as seen in a direction of a wind W) the geometrical axis A. The weight section 15 may be a heavy element connected to the cloth of the wind element 10 but may also be a part of the cloth that has a locally high density or thickness, such that a relative weight-increase is obtained at the location of the weight section 15.

A second cable 8 is at one of its ends connected to the sleigh 7 and at the opposite end connected to a spinning wheel 20. More particularly, the spinning wheel 20 may be a free wheel that can rotate when the first support 11 is moved in a direction towards the first location L1. The rotation is accomplished by the second wire 8 being arranged around the spinning wheel 20 such that the spinning wheel is rotated when the second wire 8 unwinds (i.e. when the first support 11 moves to the first location L1). A retraction element, which will be further described below, applies a force on the spinning wheel 20 for winding the second wire 8 around the spinning wheel when the 11, which results in a force applied on the first support 11 (via the second cable 8 and the sleigh 7), that may move the first support 11 from the first location L1 to the second location L2.

As will be described further below, a wind W acting on the wind element 10 applies a force on the wind element 10 such that it moves in a direction along the wind W, which causes the first support 11 to move from the second location L2 to the first location L1. By allowing the wind element 10 to oscillate about the geometrical axis A, an area of the wind element 10 perpendicular to the wind W and hence the force applied on the wind element 10 by the wind W is allowed to vary such that it periodically overcomes the force applied on the first support 11 by the retraction element in the spinning wheel 20.

The guide rail 14 is supported by a support structure 28 which according to one embodiment also holds the first cable 9 such that the wind element 10 extends in a substantially longitudinal direction. Typically, the longitudinal direction may be vertical or relatively vertical direction.

As can be seen, a damper 18 can be connected between the first cable 9 and the support structure 28, and a further support structure 6 can guide the first cable 9 in order to damp possible vibrations in the wind element 10 when it oscillates between the geometrical axis A. The damper 18 is particularly useful in that it may reduce noise caused by vibration. It is however possible to omit both the damper 18 and the first cable 9, for example by attaching the second support 12 directly to the support structure 28, or attaching the second support 12 via a pivotal joint to the support structure 28. The joint can be configured to limit the rotational movement of the wind element 10, thus only allowing axial rotation around the geometrical axis A to a certain degree. It is then possible to avoid e.g. a vertical orientation of the wind element 10 against the wind, which may cause stalling.

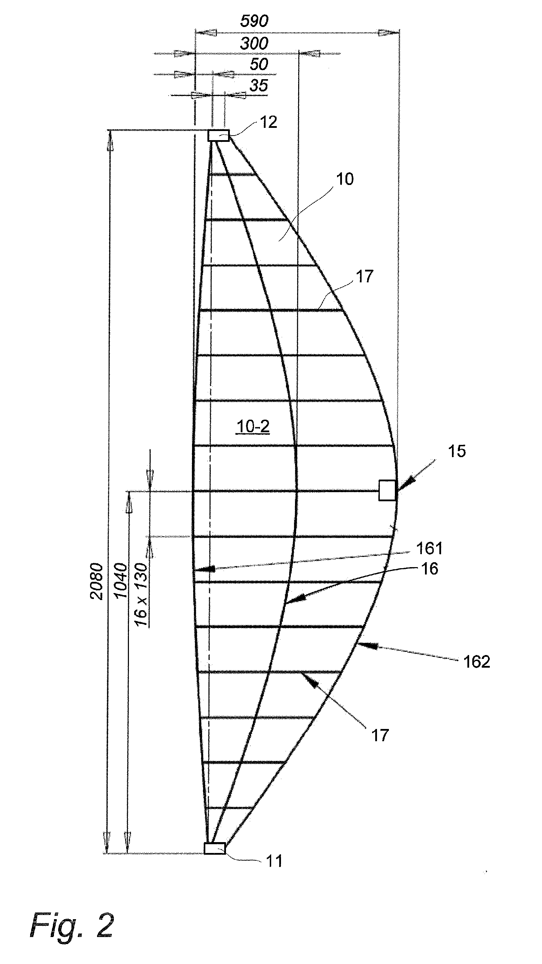

With further reference to Fig. 2 the wind element 10 is illustrated in further detail. As can bee seen, according to one embodiment the wind element 10 may have three longitudinal stiffeners, where a first stiffener 161 defines a first peripheral end of the wind element 10 and a second stiffener 162 defines a second peripheral end of the wind element 10. In between the first stiffener element 161 and the second stiffener element 162 the longitudinal stiffener 16 is arranged. The wind element 10 may in the illustrated embodiment have fifteen transverse stiffeners 17 which may be of the same type as the peripheral 161, 162 and longitudinal 16 stiffeners. According to one embodiment, the longitudinal stiffener element 16 has a substantially straight shape, to bear the power in the wind element 10. A suitable type of stiffener can be a rod made of carbon fiber and with a thickness of 3 mm. The weight section 15 can, for example, be an element with a streamlined shape and with a weight of 180g. Dimensions that can be used include, for example, the dimensions given in mm and illustrated in Fig. 2 with an italic font. The transverse stiffeners 17 are substantially transverse the longitudinally arranged stiffeners 161, 16, 162, even though this is not always necessary.

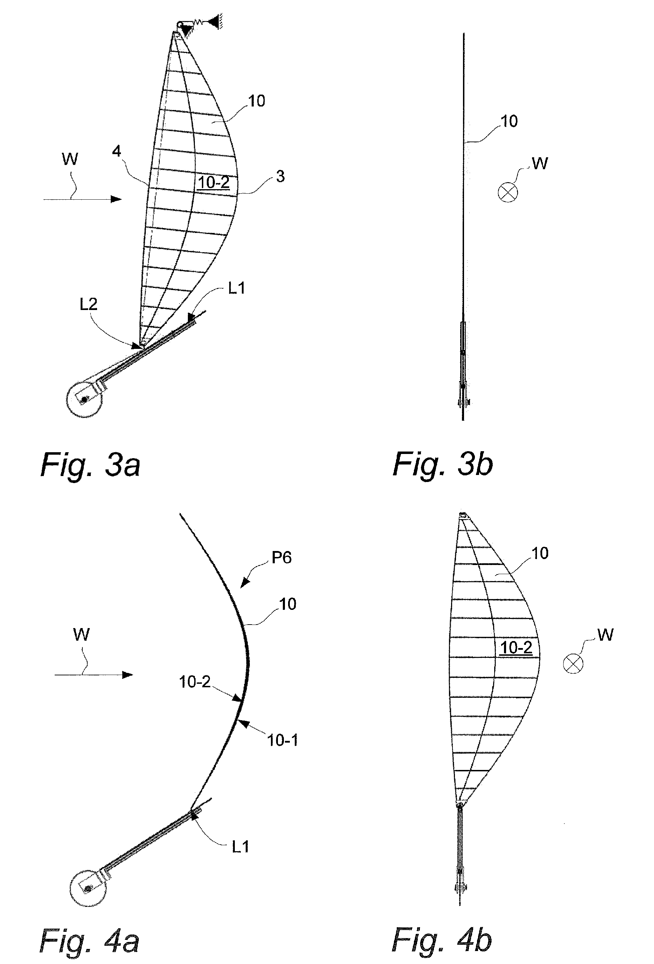

With further reference to Fig. 3a and 3b the wind element 10 is illustrated in further detail as seen from the second side 10-2 of the wind element 10. Here a rotational end 4 of the wind element 10 first meets the wind W, and back end 3 furthest from the rotational end 4 is last subjected to the wind W. It is to be noted that in Figs 3a-3b the wind W has not yet started to oscillate the wind element 10 which hence has a planar extension as can be seen in Fig. 3b, showing the wind element 10 from a direction along the direction of the wind W (i.e. when the wind is into the plane of the drawing). According to another embodiment, the wind element 10 does not have a planar extension as shown in Figs. 3a-3b, but instead a bellied extension. When the wind element 10 is subjected to a wind it starts to oscillate about the geometrical axis A, and thus moves the first support 11 back and forth between the first location L1 and the second location L2.

When the wind element 10 oscillates it bulges in the wind and when the first support 11 is at the first location first location L1, the wind element 10 forms an arc as shown in Fig. 4a. In this position P6 the wind element 10 has a maximal area facing the wind, as can be seen in Fig. 4b. The wind element 10 thus does not have to stand vertically to the wind. The pivotal joint which connects the second support 12 with the support structure 28 then limits the rotational movement of the wind element 10 around the geometrical axis A.

More specifically, when the wind element 10 oscillates it rotates about the geometrical axis A in a periodic manner, which in is stark contrast to the irregular flattering of e.g. a flag. During oscillation, the wind element 10 repeatedly is in a number of positions P1-P6 that in turn corresponds to the first support 11 being in the first location L1, in the second location L2 or in between the first location L1 and second location L2.

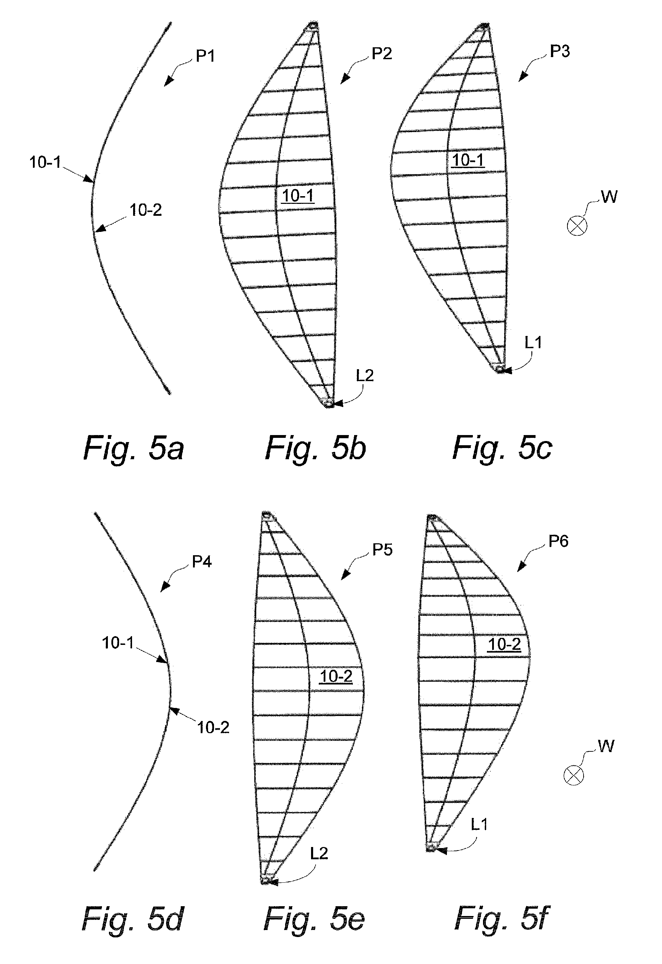

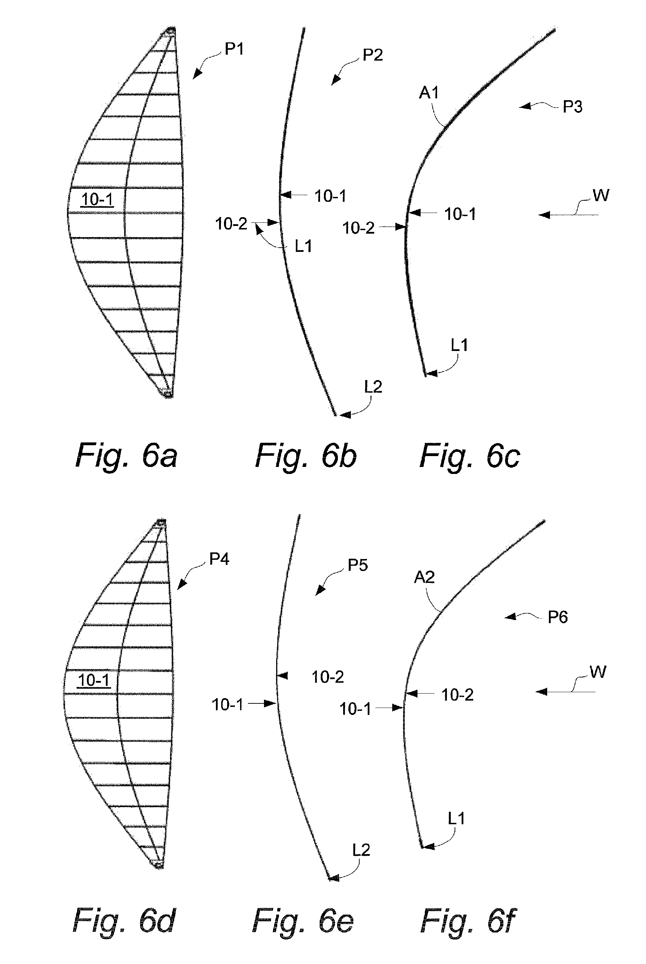

With reference to Figs. 5a - 5f and Figs 6a - 6f, the wind element 10 is in first position P3 (Figs 5c, 6c) when the first side 10-1 of the wind element 10 faces the wind W. When in the first position P3, the wind element 10 has a maximal curvature as can bee seen in Fig. 6c, since the distance between the first support 11 and the second support 12 is smallest possible by virtue of the first support 11 being at the first location L1.

The wind element 10 then rotates towards a next position P4 (Figs 5d, 6d) such that it has a minimal area facing the direction of the wind W. During this rotation the force of the wind W acting on the wind element 10 is reduced and the retraction element in the spinning wheel and/or the rigidity of the wind element 10 which tend to straighten out the wind element 10, overcomes the force induced by the wind on the wind element 10, and thereby moves the first support 11 towards the second location L2.

The wind element 10 continues rotating towards a next position P5 (Figs 5e, 6e) until the first support 11 is at the second location L2 and the second side 10-2 of the wind element 10 faces the wind W. In this position P5 the wind element 10 does not longer rotate, and has a large area facing the wind W and such that it starts to bulge in the direction of the wind with the second side 10-2 of the wind element 10 facing the wind.

The wind element 10 then moves in a direction along the wind W until it reaches a next position P6 (Figs 5f, 6f), which is referred to as a second position. The second position P6 corresponds to the first position P3 with the difference that the second side 10-2 of the wind element 10 faces the wind W instead of the first side 10-1, which means that the first support 11 again is at the first location L1. When the wind element 10 moves from position P5 to P6 a rotational momentum is induced which causes the wind element 10 to rotate about the geometrical axis A, with a rotational movement that is opposite the rotation from position P3 to P5 via P4.

When rotating, the wind element 10 now rotates to next position P1 (Figs 5a, 6a) that corresponds to the position P4 but with the difference that that wind element 10 bulges in an opposite direction. This means the first support 11 again moves from the first location L1 to the second location L2.

The wind element 10 continues rotating towards a next position P2 (Figs 5b, 6b) until the first support 11 is at the second location L2 and the first side 10-1 of the wind element 10 faces the wind W. In this position P2 the wind element 10 again has a large area facing the wind W and hence starts to bulge in a wind with the first side 10-1 of the wind element 10 facing the wind.

The wind element 10 then moves in a direction along the wind W until it again reaches the first position P3.

The wind element 10 continuously oscillates as described when subjected to the wind, by periodically moving between the positions P1 - P6. As indicates, when the wind element 10 oscillates the first support 11 is moved between the first location L1 and the second location L2. Thus, every time the wind element 10 moves (rotates) from the first position P3 to the second position P6 (or vice versa), the first support 11 is moved form the first location L1, to the second location L2 and back to the first location L1.

During the rotation from the first position P3, to the second position P6, the wind element 10 rotates approximately 180°. However, it is possible to configure a sail to rotate only about 45-70° between the first position P3 and the second position P6, by using other weight sections or stiffeners for the wind element 10.

It is to be noted that the wind element 10 rotates strictly between the positions P1-P6, i.e. the wind element moves periodically and not in a flag-like, flattering manner. Also, when the wind element 10 is in the first position P3, it forms a first uniform arc A1 in a longitudinal direction (from the first support 11 to the second support 12) and, depending on transverse stiffness of the wind element 10, a uniform arc in a transverse direction.

In a similar manner, when the wind element 10 is in the second position P6, it forms a second uniform arc A2 in the longitudinal direction (from the first support 11 to the second support 12) and, depending on transverse stiffness of the wind element 10, a uniform arc in a transverse direction. The first arc A1 is typically opposite the second and A2, and the transverse arc for the first position P3 is typically opposite the transverse arc for the second position A6.

In other words, the oscillation occurs spontaneously in a periodic manner when the wind element 10 is subjected to the wind W. During each period of the oscillation, the wind element 10 first extends in a position that can define a neutral position of the wind element where the projected area of the wind element towards the wind is at a minimum (position P1), then to rotate about the geometrical axis in a first rotational direction to an outermost position, having a maximum projected area towards the wind (position P3), then rotate about the geometrical axis in second opposite rotational direction to a further neutral position where the projected area of the wind element towards the wind is at a minimum again (position P4), then rotate about the geometrical axis in second rotational direction to a further outermost position (position (P6), having again a maximum projected area towards the wind, and finally rotate about geometrical axis in first rotational direction to the neutral position (P1) first mentioned. This completes a period of the oscillation which is then repeated any number of times. In this context, the wind element rotates from position P1 to position P3 via position P2, and from position P4 to position P6 via position P5.

The first support 11 is configured to move towards the second location L2 when the wind element during a period moves from position P3 to position P5 via position P4, respectively moves from position P6 to position P2 via position P1. The first support 11 moves towards the first location L1 when the wind element during a period moves from position P2 to P3 and respectively moves from position P5 to P6. This creates a reciprocating motion of the first support 11 when the wind element 10 is subjected to the wind.

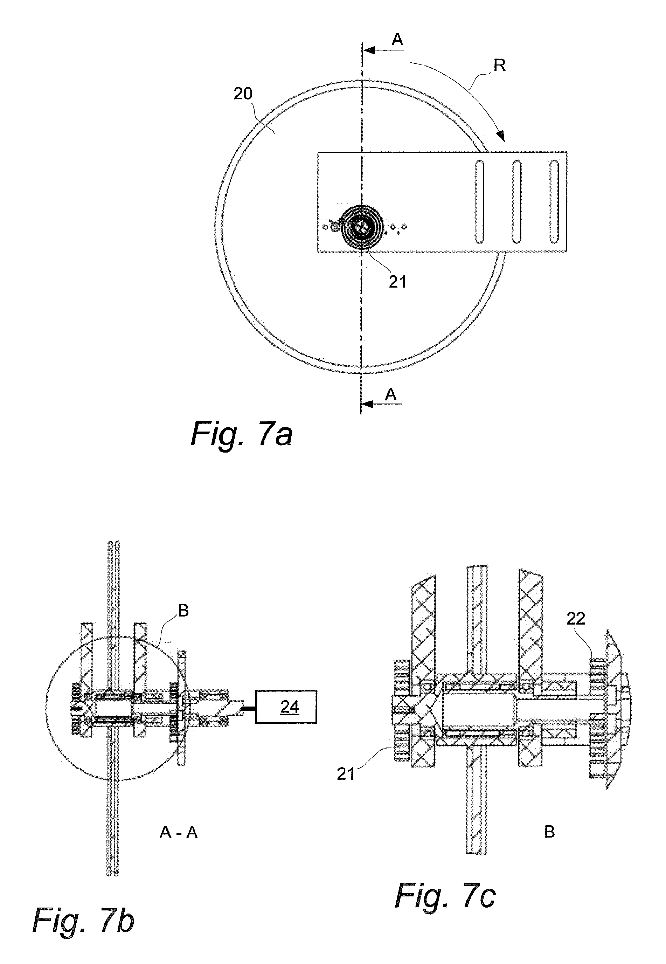

With reference to Figs 7a - 7c, the spinning wheel 20 can be a free wheel where the second wire drives the wheel 20 when unwound from an axis of the wheel 20. As mentioned, the second wire is unwound when the first support 11 is moved from the second location L2 to the first location L1, such that the wheel 20 spins with the illustrated rotation R. When the second wire is wound on the axis of the wheel 20, the wheel continues rotating in the direction R, by using a principle similar with a typical driveshaft in modern bicycle.

When rotating, the spinning wheel 20 activates the aforementioned retraction element 21, which may have the form of a spring that tightens and thereby induces a force on the sleigh 7 in Fig. 1 (i.e. a force for returning the first support 11 to the second location L2).

As the wind element 10 thereafter moves away from any of the first position P3 and the second position P6, the force from the wind will decrease and the force from the retraction element 21 and/or the force from the rigidity of the wind element 10 which tend to straighten out the wind element 10, will be greater than the force from the wind and the sleigh will return against the wind, whereby the distance between the first support 11 and the second support 12 again increases, leading to a more planar wind element.

The wind element is flexible such that when it oscillates under influence of wind it has a minimum of internal relative movements within its material. This can be achieved by making the wind element sufficiently stiff so that substantially only the so called fundamental mode of bending occurs in the wind element and substantially no overtones are present during the periodic oscillation. The fundamental mode and the overtones is a known phenomenon from the theory of standing waves, where the fundamental mode has half a wavelength over the material and the overtones have shorter wave lengths. The wave equation in one dimension can be given by

$$\frac{1}{v^2}\frac{\partial^2 u}{\partial t^2} = \frac{\partial^2 u}{\partial x^2}$$

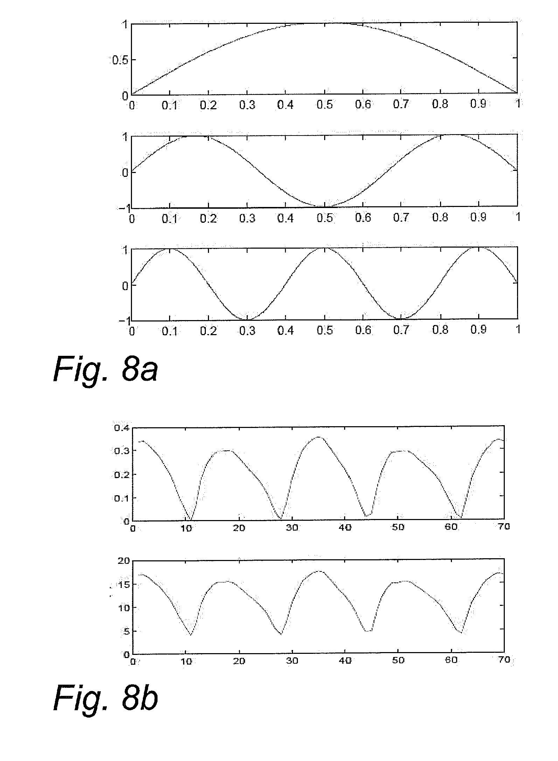

where for simplicity $0 < x < 1$, $t > 0$. The function $u(x, t)$ denotes the vertical displacement from the x axis at position x and time t. Its left and right hand ends are held fixed at height zero, that is $u(0,t) = u(1,t) = 0$ when $t > 0$. Then for certain initial conditions it can be shown that the solutions to the wave equation are given by $u(x, t) = \sin(k* pi * x) * \cos(v * k * pi * t)$ where $k = 1, 3, 5, ...$ The fundamental mode is given by $k = 1$ and the overtones are given by $k = 3, 5, 7, ...$ The fundamental mode and the two first overtones are shown in Fig. 8a.

It should be noted that any linear combination of the fundamental mode and overtones are also valid solutions to the wave equation. Similar results hold for two-dimensional surfaces where a fundamental mode and overtones are also obtained.

Such standing waves occur for example in freely vibrating strings. The same phenomenon also occurs for the flexible wind element which is a two-dimensional surface. The exact shape of the fundamental mode and the overtones of the surface depends on a number of factors such as material properties.

The above equation assumes no stiffness is the material. The governing equation of flexural wave in an elastic thin plate (wind element) with stiffness can be described as

$$D\nabla^2\nabla^2 w + \rho h\frac{\partial^2 w}{\partial t^2} = q,$$

where $D$ is the bending stiffness of the plate, and $D = Eh^3/12(1 - v^2)$, $E$ is Young's modulus, $v$ the Poisson's ratio, $\rho$ is the density of the plate, $h$ is the thickness of the plate, $t$ is time, and $q$ is the transverse load. The load q may come from the wind acting on the plate and/or other sources like for example how the plate is attached to its supporting structure and the ballast. The solution to the equation is not given by simple sinus function but can still be described by a fundamental mode and overtones as before. The stiffer the material is, the less significant is the presence of overtones in any direction of the material. The stiffness $D$ should be chosen such that, for prevailing loads $q$, the internal shape of the plate can substantially be given by the fundamental mode. This means that the overtones should be small compared to the fundamental mode. Thus, if the material of the wind element is sufficiently stiff, it substantially only has the fundamental mode when the wind element oscillates periodically under the influence of the wind. Having only the fundamental mode has the advantage of providing a stable, predictable and periodic movement. Having only the fundamental mode also makes the wind element having a minimum of projected area towards to wind twice during a period and also having a maximum of projected area towards to wind twice during a period. Thus, it is possible to obtain a maximum of force on the wind element from the wind that can be converted to useful energy, and a minimum of force when returning the wind element against the wind. It should be noted that the periodic movement of the wind element leads to a periodic energy conversion.

The first half of the period, where the wind element is moving from a first neutral position to a first outermost position and a second neutral position, is substantially symmetric to the second half of the period. This means that the force on the wind element and the movement of first support will have half the period duration compared that of to the wind element. The period duration depends on a number of factors such as wind speed, wind element material properties and how the wind element is attached to its supporting structure. However, by investigating and realizing the theory behind fundamental modes and overtones, suitable factors for the wind element and a suitable retraction element may be empirically determined.

To further provide for a stable, predictable and periodic oscillation, the degrees of freedom for movement of the first support can be kept to a minimum. This can be achieved by allowing only movement in one direction by for example using e.g. the sleigh and guide rail and attaching the wind element to the sleigh in a rigid manner. Stability can also be improved by attaching the weight at the back of the wind element as shown in Fig. 1 and thereby introducing more inertia to the wind element which make the oscillation more stable.

To allow for the wind element to efficiently capture the wind, the wind element shall bend sufficiently such that the fundamental mode has large amplitude. This is obtained by allowing the distance along the geometrical axis A between the first support and the second support to decrease during the oscillation period of the wind element. When using a sleigh and guide rail, this can be obtained by slanting the guide rail upwards (in a direction at least partially towards the second support), such that the distance along the geometrical axis A decreases when the sleigh travels along the guide rail in a direction along the wind. Thus, the guide element 14 is configured to control the movement of the first support 11 in a direction upwards in a direction at least partially towards the second support 12. To further facilitate that the first support of the wind element can travel a relatively long distance, the wind element can be set to lean backwards when in stretched out to planar position, such that the geometrical axis between the two supports 11 and 12 in is not vertical in the planar position as illustrated in Fig. 1. Since the work E induced by the sleigh is given by E = F*s where F is the force and s the distance, a relatively long travel distance s along the guide rail can be used.

The force on the wind element from the wind may involve fast transient forces. In order to be able to capture these short-lasting forces, it is possible to use a mechanism with low inertia that is able to convert the force efficiently to energy and to also store it for a shorter period of time. This can be done by using a resilient member 22 in form of e.g. a second spring or equivalent device for capturing and storing the energy. For converting the energy into electrical energy, a conventional generator 24 can be connected to the axis of the spinning wheel.

When applying a constant force F to a body of mass m during a period of time t, the work done E is given by $E = (F^2 \cdot t^2)/(2\,m)$. Thus, the smaller the mass the higher the energy produced. The mass of the system may hence be kept low to be able to capture also transient forces and to harness the available energy. This is a reason for having the resilient element 22 for storing as much as possible of the energy from transient forces. Accordingly, the retraction element 21 for pulling the wind element back against the wind and the resilient element 22 for storing the energy from the force acting on the wind element may be used. The energy stored in the resilient element 22 may subsequently be used to drive the generator 24 or an equivalent unit.

Instead of using the spinning wheel for harvesting energy, the guide rail and sleigh may in combination form a linear generator. Of course, other methods for harvesting energy may be used, while still employing the principle of the herein described oscillating wind element that induce a reciprocal movement of a support. A conventional linear spring can then be used for returning the first support 11 to the second location L2.

When the first support 11 is moved from the second location L2 to the first location L1, both the retraction member 21 and the resilient element 22 will be tightened. Subsequently, when the wind element rotates from an outermost position (P3) towards a neutral position (P4), the force from the wind will decrease and the retraction member 21 will pull the first support (and hence the wind element) back against the wind. The resilient element 22 is locked from moving in this direction and the energy will be stored in the resilient element 22. The second half of the period will be equivalent, i.e. when the wind element moves form position P6 to position P1. This will be repeated any number of times. Since the resilient element 22 cannot be tighten without limit, it must be allowed to drive an auxiliary member like the generator 24 or equivalent.

The wind element can be made of any material or combination of materials that result in a flexible but sufficiently stiff wind element, such that it oscillates substantially periodically with the fundamental mode. According to one embodiment, the wind element is made of a plastic material. The periodic oscillation can be illustrated by Fig 8b which in the upper graph shows a force induced by the movement of the wind element, and which in a lower graph shows a position of the first support, where the maximum values represent the first support being at or near the first location first location L1, and the minimum values represent the first support 11 being near or at the second location L2. As can bee seen, the oscillation/movement is essentially periodic.

Of course, other dimensions of the wind element may be used as well, as well as other number of stiffeners, types of cloth for the wind element, and other weights of the weight section, while still obtaining the described periodic oscillation of the wind element. Also, the force induced on the first support by the retraction element may be varied such that the desired periodic oscillation is obtained, and, as mentioned a suitable retracting force may be empirically determined. As the skilled person realizes, suitable sizes and properties (stiffness, density, weight etc) of the wind element may be empirically determined, for example when scaling up the wind element. This includes employing a wind element made of e.g. glass or carbon fiber, or even a metal sheet.

Additionally or alternatively, the second support may be movably arranged in a manner similar with the first support, for converting the wind energy into useful movement.

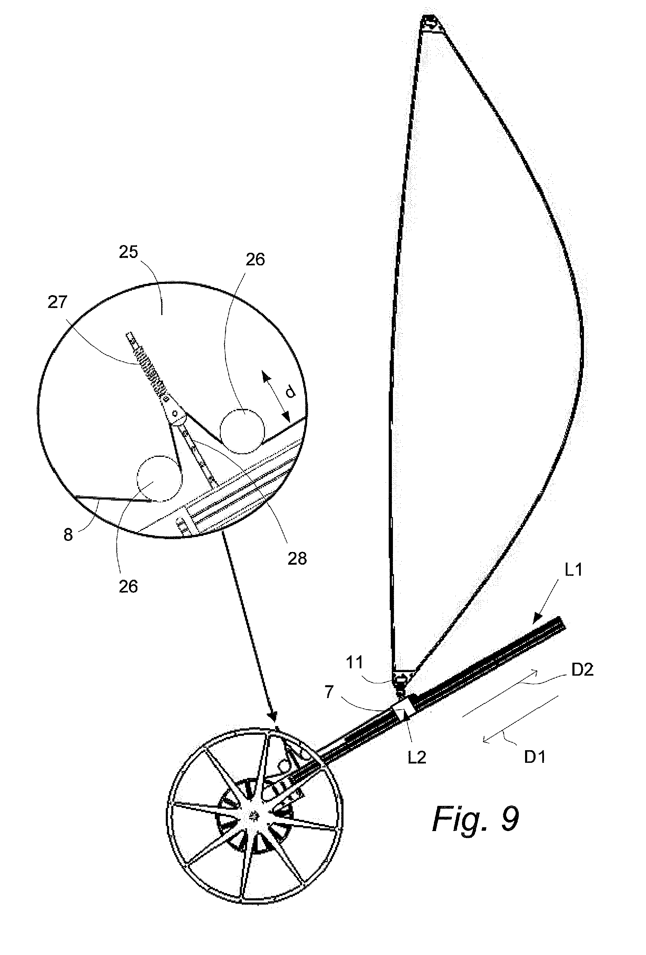

Figure 9 shows a damping mechanism 25 for the energy converter, disclosing an enlarged view of the damping mechanism 25. The damping mechanism 25 is adapted to facilitate movement of the first support 11 and thus the wind element 10 in the second direction D2 to said first location L1, by damping the movement of the second wire 8. The mechanism 25 comprises two rolling members 26 and an elastic device 27 slidably engaged with the second wire 8 which in turn is engaged with a device for harvesting energy such as the spinning wheel 20 as explained before. The elastic device 27 comprises a resilient element inter alia in the shape of a spring or an elastic wire attached to a pulley in which the second wire 8 slides. The elastic device 27 is suspended on a support peg 28.

When the wind element 10 is withdrawn in the direction of D2, the resilient member is gradually expanded such that movement of the first support 11 and the wind element 10 is enabled. The second wire 8 is in the figure connected to sleight 7, which in turn is connected to the first support 11. The damping caused by the resilient member preferably goes to infinity. The illustrated damping mechanism 25 is only an example, and the elastic device 27 may instead be configured to be compressed to create the damping effect. According to one embodiment, if the wind element has a length of 2 meters, the damping length of the second wire 8 is approximately 2 centimeters, thus 2d. This means that the sliding length d between a rolling member 26 and the pulley shown in the enlarged view is approximately 1 centimeter.

If the spinning wheel 21 for example is engaged with a generator, the movement of the first support 11 in the D2 direction will probably become inert, especially at the beginning of the movement, because of the load of the generator. The damping mechanism 25 aids the wind element 10 to start the oscillating movement from the first supports 11 lowermost position L2. The damping mechanism 25 gives the first support 11 approximately a damping length 2d of the second wire 8 for movement in the D2 direction without having any essentially load from the generator on the second wire 8. The first support 11 will then move in the D2 direction which will make it possible for the wind element 10 to belly and catch wind. Thus, the damping mechanism 25 allows the first support 11 to move along the guiding rail in the D2 direction such that the wind element 11 can belly, even if the second wire 8 is on load by a generator which makes it inert to pull on the second wire 8.

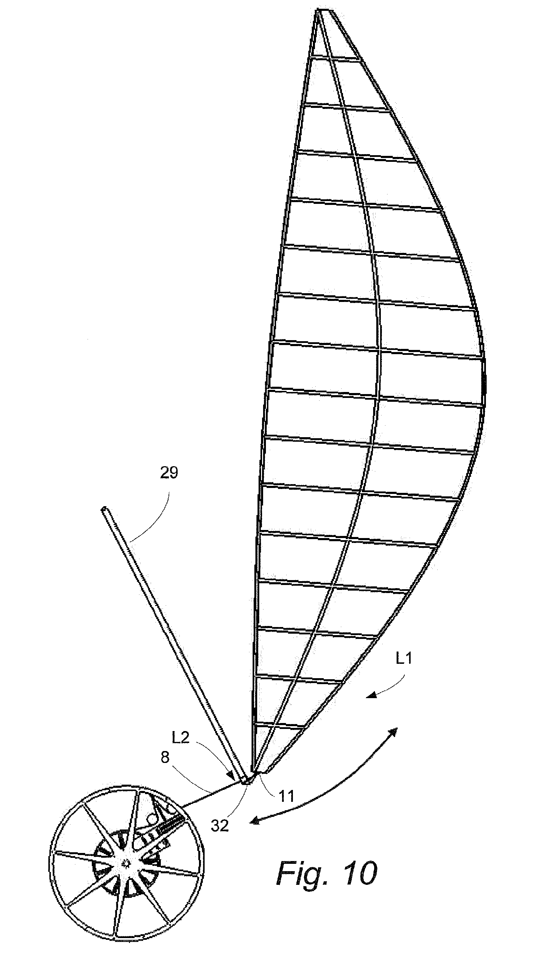

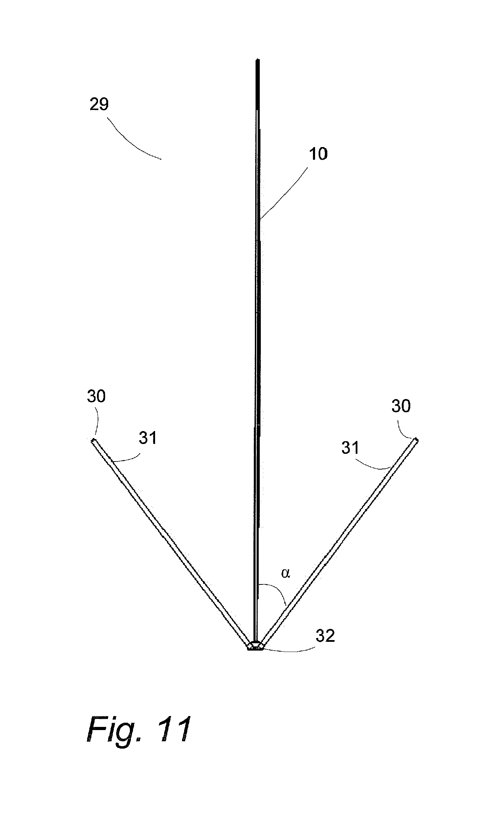

In Fig. 10 a variant of a guide element 14 is shown from the side. This embodiment comprises a sway setup 29 for the wind element 10 configured to control the movement of the first support 11 along a circular arc between a first L1 and second L2 location. The distance along the geometrical axis A between the first support and the second support will then decrease during the oscillation period of the wind element, which is obtained by arranging the sway setup such that the arc slants upwards in a direction at least partially towards the second support, such that the distance along the geometrical axis A decreases when the sway travels along the arc in a direction along the wind. Thus, the guide element 14 is configured to control the movement of the first support 11 in a direction upwards in a direction at least partially towards the second support 12. When the wind catches the wind element 10, the wind will force movement of the first support 11 to the first location L1. When the wind element 11 rotates such that it has substantially no surface exposed to the wind, the first support 11 will move to the second location L2 mainly because of the weight of the wind element 10 and the rigidity of the wind element 10 that forces itself to straighten up. The sway setup 29 is connected to the second wire 8 and pivotally connected to the first support 11 of the wind element 10 at an attachment point 32 at a first end of the sway setup 29. Turning to Fig. 11, the sway setup 29 comprises two struts 31 fixedly attached at an angle $2\alpha$ to each other at the attachment point 32 at first ends, respectively, of the struts 31. The angle of attachment α is according to one embodiment between 30 and 60 degrees, and preferably 45 degrees. The struts 31 are pivotally attached to a support construction (not shown) at their second ends 30, respectively, and may according to one embodiment be attached to spinning wheels or similar energy collecting constructions for harvesting energy caused by the movement of the struts 31. When the wind element 10 oscillates, the sway setup 29 and thus the wind element 10 are forced to move back and forth along the periphery of a circle (curved path) as shown by the arrow in the figure, as the struts 31 are pivotally attached at their second ends 30. The radius of the circle is determined by the length of the struts 31. Thus, the longer the length of the struts 31, the straighter the curved path will be. The struts 31 are preferably made of a light-weight material such as carbon fiber. According to another embodiment, the struts 31 are constructed as frame works to provide a light and strong construction. The sway setup 29 provides a robust and cheap construction of a guide element 14 for the energy converter. It is further easy to maintain and essentially insensitive to different temperatures.

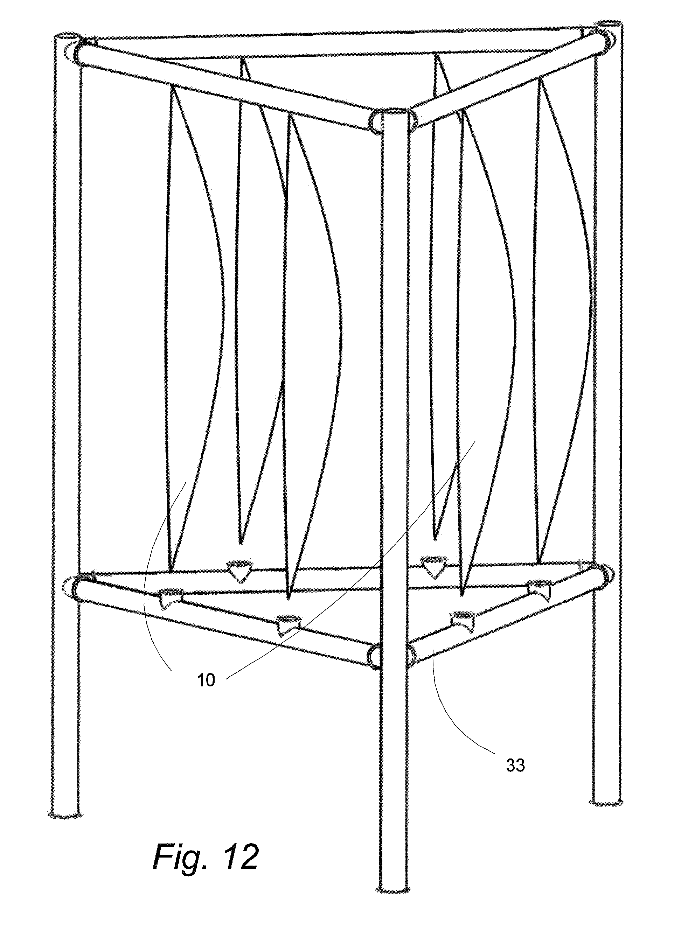

Fig. 12 illustrates a support system 33 for a plurality of energy converters according to the invention. The system 33 is here exemplified as a tripod wherein the energy converters are located between horizontally placed support bars. The energy converters are only schematically illustrated in the figure, and it is understood that several parts of the converters are obviated for simplicity of the figure. The support bars are upheld by poles, here in the tripod with three poles. In the figure, the poles are vertically placed, but according to another embodiment, the poles are placed at an angle inwards against the middle of the tripod to provide more stability to the support system. Other systems than tripods are also possible, provided that they give sufficient support for the energy converters during use of the same.

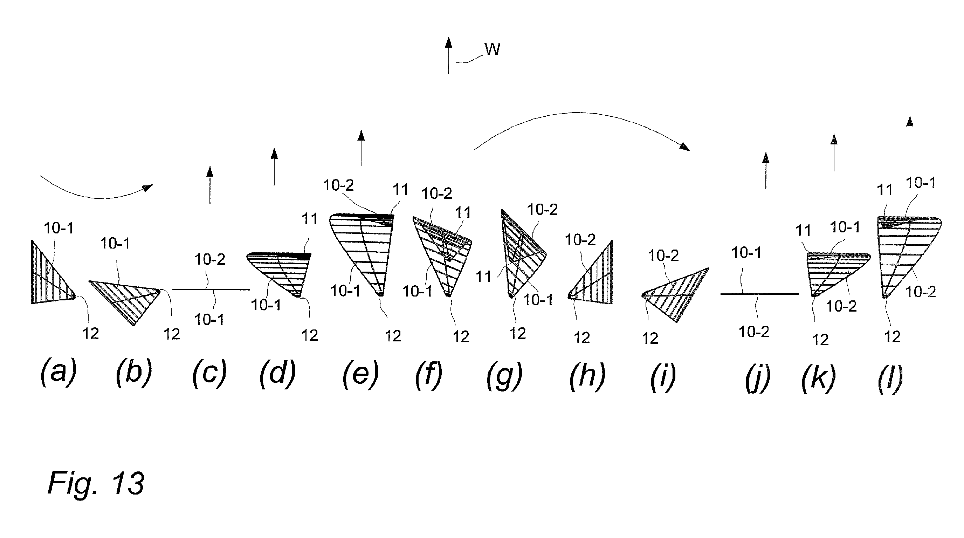

With reference to Fig. 13 a-l, an oscillation pattern of the wind element 10 is shown as seen from above when the wind element 10 is subject to wind. The direction of the wind is indicated as "W" in the figure. Fig. 13a and Fig. 13b illustrates the wind element 10 when it has started to rotate against the clockwise direction indicated by the arrow above the figures. The position of the wind element 10 in Fig. 13a corresponds to the position P1 of the wind element 10 in Fig. 5a. In Fig. 13c, the wind faces the first side 10-1 of the wind element 10, which then starts to bulge in the other direction as shown in Fig. 13d. The wind element 10 does not have to stand vertically to the wind as shown in Fig. 13c and Fig. 13j, it can instead stand at an angle to the wind as shown in Fig. 13b and Fig. 13i when it starts to bulge in the other direction. The rotation of the wind element 10 may be controlled by changing the energy outtake and/or limit the movement of the second support 12 of the wind element 10. The force of the wind withdraws the first support 11 to the first location L1, as shown in Fig. 13e. The position of the wind element in Fig. 13e corresponds to the position P3 of the wind element in Fig. 5c. The wind element 10 then starts to rotate in the clockwise direction as indicated by the arrow during the positions shown in Fig. 13f to Fig. 13i. During the rotation, the first support 11 of the wind element is drawn to the second location L2. When the wind element 10 reaches the position in Fig. 13j where the wind faces the second side 10-2 of the wind element 10, the wind element starts to bulge in the other direction as shown in Fig. 13k and Fig. 13l. The force of the wind withdraws the first support 11 to the first location L1, as shown in Fig. 13f which corresponds to the position P6 of the wind element 10 in Fig. 5f. The position of the wind element 10 in Fig. 13h corresponds to the position P4 of the wind element 10 in Fig. 5d, and the position of the wind element 10 in Fig. 13l corresponds to the position P6 of the wind element 10 in Fig. 5f. After the position of the wind element 10 shown in Fig. 13l, the wind element 10 continues to the position shown in Fig. 13a etc.

**Claims**

1. An energy converter for converting wind energy into movement, said energy converter comprising
a first support (11),
a second support (12) arranged at a distance (D) from the first support (11), and
a wind element (10) connected to the first support (11) and connected to the second support (12), such that the wind element (10) is capable of moving the first support (11) between a first location (L1) and a second location (L2) by oscillating around a geometrical axis (A) extending between the supports (11,12), when the wind element (10) is subjected to a wind (W), **wherein**
the wind element (10) is configured to repeatedly oscillate between a first position (P3) and a second position (P6), such that

    - a first side (10-1) of the wind element (10) faces a direction of the wind (W) when the wind element (10) is in the first position (P3), and a second side (10-2) of the wind element (10) opposite the first side (10-1) faces the direction of the wind (W) when the wind element (10) is in the second position (P6),
    - the first support (11) is moved from the first location (L1) to the second location (L2) and back to the first location (L1), when the wind element (10) oscillates from the first position (P3) to the second position (P6), and
    - the first support (11) is moved from the first location (L1) to the second location (L2) and back to the first location (L1), when the wind element (10) oscillates from the second position (P6) to the first position (P3).

**2.** An energy converter according to claim 1, wherein the wind element (10) is configured to oscillate between the first position (P3) and the second position (P6) by repeatedly rotating about the geometrical axis (A).

**3.** An energy converter according to claim 1 or 2, wherein the wind element (10) is configured to oscillate between the first position (P3) and the second position (P6) by repeatedly rotating at least 45° about the geometrical axis (A).

**4.** An energy converter according to any one of claims 1 - 3, wherein the wind element (10) is configured to oscillate from the first position (P3) to the second position (P6) by a first rotational movement and oscillate from the second position (P6) to the first position (P3) by a second rotational movement, wherein the second rational movement is opposite the first rotational movement.

**5.** An energy converter according to any one of claims 1 - 4, wherein the wind element (10) is configured to move the first support (11) such that the distance (D) between the supports (11, 12) repeatedly increase and decrease, when the when the wind element (10) oscillates between the first and second positions (P3, P6).

**6.** An energy converter according to claim 5, wherein the wind element (10) is configured to move the first support (11) such that the repeated increase and decrease of the distance (D) between the supports (11, 12) is periodic.

**7.** An energy converter according to any one of claims 1 - 6, wherein the wind element (10) is configured to move the first support (11) from the second location (L2) to the first location (L1) in a direction along the direction of the wind (W).

**8.** An energy converter according to any one of claims 1 - 7, wherein the first support (11) is configured to move from the first location (L1) to the second location (L2) in a first direction (D1), and move from the second location (L2) to the first location (L1) in a second direction (D1) that is opposite the first direction (D1).

**9.** An energy converter according to any one of claims 1 - 8, comprising a guide element (14) configured to control the movement of the first support (11) between the first and second locations (L1, L2).

**10.** An energy converter according to any one of claims 1 - 9, wherein the wind element (10) comprises a weight section (15) arranged at a distance from the geometrical axis (A).

**11.** An energy converter according to any one of claims 1-10, wherein the wind element (10) comprises a longitudinal stiffener element (16) extending in a longitudinal direction of the wind element (10).

**12.** An energy converter according to any one of claims 1-11, wherein the wind element (10) comprises a transverse stiffener element (17) extending in a transverse direction of the wind element (10).

**13.** An energy converter according to any one of claims 1-12, comprising a spinning wheel (20) connected to the first support (11), for transferring the movement of the first support (11) into a rotational movement of the spinning wheel (20).

**14.** An energy converter according to any one of claims 1-13, wherein the wind element (10) is configured to have the form of a first arc (A1), when the first side (10-1) of the wind element (10) faces the wind (W), and have the form of a second arc (A2) with a shape opposite the first arc (A1), when the second side (10-2) of the wind element (10) faces the wind (W).

**15.** An energy converter according to any one of claims 1-14, wherein the wind element (10) is configured to rotate around the geometrical axis (A) such that the oscillation of the wind element (10) between the first position (P3) and the second position (P6) is periodic.

*Fig. 1*

*Fig. 2*

*Fig. 3a*

*Fig. 3b*

*Fig. 4a*

*Fig. 4b*

Fig. 5a    Fig. 5b    Fig. 5c

Fig. 5d    Fig. 5e    Fig. 5f

*Fig. 6a*          *Fig. 6b*          *Fig. 6c*

*Fig. 6d*          *Fig. 6e*          *Fig. 6f*

Fig. 7a

A - A

Fig. 7b

B

Fig. 7c

Fig. 8a

Fig. 8b

*Fig. 9*

29

L1

L2

8

11

32

Fig. 10

Fig. 11

Fig. 12

*Fig. 13*

**EP 2 343 452 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4915584 A
- FR 510435
- US 3995972 A
- US 20090121489 A1
- US 4486145 A
- GB 2027494 A
- WO 2006043600 A1